(19) Europäisches Patentamt
European Patent Office
Office européen des brevets

(11) **EP 2 337 245 B1**

(12) **EUROPEAN PATENT SPECIFICATION**

(45) Date of publication and mention
of the grant of the patent:
**10.04.2013 Bulletin 2013/15**

(51) Int Cl.:
*H04B 10/50* (2013.01)   *H04B 10/25* (2013.01)
*H04L 27/26* (2006.01)   *H04L 5/00* (2006.01)

(21) Application number: **09290957.1**

(22) Date of filing: **17.12.2009**

(54) **Optical OFDM transmission having a variable transmission rate**

Optische OFDM-Übertragung mit variabler Übertragungsrate

Transmission OFDM optique dotée d'un taux de transmission variable

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**22.06.2011 Bulletin 2011/25**

(73) Proprietor: **Alcatel Lucent**
**75007 Paris (FR)**

(72) Inventors:
• **Buchali, Fred**
**71336 Stuttgart (DE)**
• **Klekamp, Axel**
**71706 Markgröningen (DE)**

(74) Representative: **Wetzel, Emmanuelle**
**Alcatel Lucent**
**Intellectual Property & Standards**
**70430 Stuttgart (DE)**

(56) References cited:
**EP-A1- 2 071 754     US-A1- 2006 223 461**

• **LIANG DU ET AL: "Wdm channel spacing in ultra long haul optical OFDM systems" OPTICAL FIBRE TECHNOLOGY/AUSTRALIAN OPTICAL SOCIETY, 2006. ACOFT/AOS 2006. AUSTRALIAN CONFERENCE ON, IEEE, PISCATAWAY, NJ, USA, 10 July 2006 (2006-07-10), pages 7-9, XP031252089 ISBN: 978-0-9775657-1-9**

**Description**

The present invention relates to an optical OFDM transmission method and system having a variable transmission rate.

OFDM (Orthogonal Frequency Division Modulation) is in widespread use both in wire-bound and wireless telecommunications. Examples of OFDM based communications systems include DSL and WLAN according to IEEE 802.11G.

In an OFDM system a digital stream to be transmitted is divided into a plurality of data words which are grouped to OFDM symbols. Each OFDM symbol comprises a plurality of subcarriers. Each OFDM subcarrier is modulated by one word consisting of at least one bit. The OFDM subcarriers may be modulated by BPSK, QPSK, 16-QAM or 64-QAM modulation schemes, for example. The OFDM subcarriers are orthogonal to each other. Orthogonality within the context of OFDM is defined such that an OFDM subcarrier has its maximum at a frequency, where the amplitude of a neighbouring OFDM subcarrier is zero. Therefore, distortions between the subcarriers can be reduced significantly. The plurality of OFDM subcarriers are distributed over a predetermined OFDM frequency band.

For terrestrial long distance communications optical transport networks are used. The physical channel of such optical transport network is defined by a fibre connecting a transmitter and a receiver. Such optical transport networks are defined, for example, by ITU standard G.709, such as OTU1 having a line rate of approximately 2.7 Gbit/s, OTU2 having a line rate of approximately 10.7 Gbit/s and OTU3 having a line rate of approximately 43 Gbit/s.

In order to increase the maximum payload of an optical fibre connecting two network nodes, wavelength division multiplexing (WDM) may be used. The optical signals may be generated by lasers emitting different wavelength and separate optical modulators. As receivers photo diodes may be used. For feeding the different wavelengths into a fibre and for separating the different wavelengths prior to a receiver a so-called optical add/drop multiplexer (OADM) may be used. Such OADM may comprise a cascaded dielectric multi layer filter, cascaded fibre-Bragg grating or arrayed waveguide gratings (AWG), for example.

Currently, so-called DWDM (Dense Wavelength Division Multiplex) systems according to ITU-T G.692 are in use. In such systems, 81 channels, each having a spacing of 0.4 nm corresponding to an optical frequency spacing of 50 GHz, are arranged around a wavelength of 1550 nm, corresponding to an optical frequency of 193.1 THz. Accordingly, the 81 channels are arranged in a spacing of 50 GHz (0.4 nm) from an optical frequency of 192.1 THz (1560.61 nm) to an optical frequency of 196.1 THz (1528.77 nm).

The maximum transmission distance of an optical signal is limited by the noise of optical amplifiers, the chromatic dispersion of the fibre and the linear signal distortion resulting therefrom, and by non linear signal distortions resulting from the Kerr effect. The Kerr effect can lead to self phase modulation (SPM) within a WDM channel, cross phase modulation (SPM) and the like. According to the Kerr effect, the diffraction index of an optical fibre is a function of the intensity or the power of a light beam transmitted by the fibre:

$$n = n_0 + \delta \, J;$$

wherein n is the actual refraction index, no is the nominal refraction index, $\delta$ is a constant depending on the material of the fibre and J is the intensity or the power of the beam transmitted by the fibre.

Accordingly, a light beam transmitted in an optical fibre must not exceed a predetermined maximum intensity to keep distortions due to the Kerr effect below a predetermined level. Therefore, optical amplifiers are required after transmitting the WDM signals over a distance of approximately 80 km to several hundred kilometers. Such optical amplifiers may be based on a fibre amplifier, erbium doped fibre amplifier or Raman amplifier, for example. In a fibre amplifier, such as an erbium doped fibre amplifier, the optical signals are amplified in a fibre doped by a suitable material, such as erbium. The amplifier is isolated from the transmission fibre by an optical isolator. The required pumping power is fed into the doped fibre by a wavelength coupler. The Raman amplifier is based on the stimulated Raman scattering, in which additionally to the light used for transmission pumping light is introduced into the fibre. It is to be noted, that such optical amplifiers apply the same gain to each optical wavelength. I.e. each of the before mentioned channels from 1528.77 nm to 1560.61 nm is amplified by the same amplification value.

By applying OFDM to a WDM system, even higher transmission rates can be achieved and such system is typically less sensitive with respect to distortions.

Preferably, an optical OFDM transmitter for a WDM system transmits signals having different transmission rates. However, if the transmission rate of an optical OFDM transmitter is changed, also the spectral width of the transmitted OFDM signal changes which may impact the maximum distance of the signal transmission.

Transmission of optical signals in a fibre is limited to a maximum distance due to the attenuation of the optical signal in the fibre and the optical signal to noise ratio (OSNR) required for signal reception and demodulation. In a conventional transmission system not using OFDM, the maximum distance is achieved by transmitting at a low bit rate which does generally not require a high OSNR. When using OFDM, transmission at a low payload transmission rate results in a reduction of the overall launch power which typically results in reduced distance transmission.

In order to vary the payload transmission rate of an OFDM system, it may be possible to vary the number of allocated subcarriers, the number of transmitted bits per subcarrier and/or constellation symbol rate per subcarrier and the OFDM symbol rate. Thereby, when signals are transmitted by a lower payload transmission rate, typically the spectral width of the OFDM signal is reduced. Due to low spectral width of low transmission rate OFDM signals nonlinear limitations of fiber require a low optical power launched into the fiber. As a result, the optical power in the receiver is low and the available OSNR is low as well. Hence, the lower payload transmission rate leads to a low maximum transmission distance.

An OFDM signal having a lower spectral width due to the lower data payload transmission rate is more sensitive to optical noise and can typically only be transmitted over a shorter distance as compared to a signal having a high payload transmission rate. However, due to the Kerr effect, the intensity of the optical OFDM signal transmitted into the fibre cannot be increased. Furthermore, in a variable bit rate system, typically all channels have the same power which is limited by the channel with the lowest power or the channel with the lowest non-linear threshold. These are typically the channels comprising low payload transmission rates which have a low spectral width and/or which are transmitted over a high number of spans (as typically the non-linear threshold is reduced with an increasing number of spans). Due to the low power, also the channels carrying higher payload transmission rates are impacted, as the launching power is reduced with regards to the maximum possible launching power. Consequently, the maximum transmission distance is reduced.

Another state of the art OFDM transmission system is known from EP-A-2071754.

Accordingly, there is a need for an improved method and system for transmitting data over an optical channel using OFDM with a variable transmission rate, in particular for transmission over a long distance.

Therefore, a method for transmitting data over an optical channel using OFDM with a variable payload transmission rate is described. The method is directed at transmitting data at a variable payload transmission rate over an optical channel using OFDM. The optical channel may comprise a predetermined OFDM frequency band which is divided into a number M of OFDM subcarriers. A first optical signal carrying first payload data with a first payload transmission rate may be transmitted with a first transmission power. In such cases, the method may comprise the step of transmitting a second optical signal carrying second payload data with a second payload transmission rate different from the first payload transmission rate with a second transmission power distributed over the predetermined OFDM frequency band. The first and second transmission power may be equal or essentially equal. In other words, the second optical signal may be transmitted at the same transmission power as the first optical signal, even though their payload transmission rates differ. In particular, the second payload transmission rate may be smaller than the first payload transmission rate.

The method may further comprise the step of dividing the second payload data into a plurality of successive OFDM symbols, each OFDM symbol having a number N of words and each word comprising at least one bit. N may be smaller than M. Furthermore, the method may comprise the step of assigning the N words to N of the M OFDM subcarriers, respectively. These N of the M OFDM subcarrier may be referred to as the assigned OFDM subcarriers. In addition, the method may comprise the step of assigning a word of the number N of words to an unassigned subcarrier of the M OFDM subcarriers. The assigning steps may comprise modulating an OFDM subcarrier with a word. This step may yield the second optical signal.

In an embodiment, the first optical signal carries the first payload data using all of the M OFDM subcarriers. Furthermore, the first optical signal and the second optical signal may use the same modulation scheme. The method may comprise the step of assigning a word of the N words to all unassigned subcarriers of the M OFDM subcarriers.

It should be noted that the N assigned subcarriers may be adjacent subcarriers in the predetermined OFDM frequency band. The N words may be assigned to the N assigned subcarriers in a first order and words of the N words may be assigned to at least a portion of the unassigned subcarriers in a second order. The second order may correspond to the first order, or the second order may be reverse to the first order.

In this context, it should be noted that the payload transmission rate may differ from the actual data transmission rate. By assigning a word to a plurality of OFDM subcarriers, the actual data transmission rate may be higher than the payload transmission rate. The payload transmission rate should be understood as the bit rate of the payload data entering an OFDM transmitter, which is not necessarily the same as the data transmission rate, i.e. the bit rate, comprised in the optical signal leaving an OFDM transmitter.

The method may further comprise the step of scrambling data comprised in the at least one of the N words, wherein said scrambling comprises one of: inversion, delaying and/or phase shifting of the data. Typically the scrambling step is performed prior to assigning a word of the N words to an unassigned subcarrier.

It should be noted that a portion of the M OFDM subcarriers may be inactive for the transmission of the second optical signal, wherein the inactive portion of the M OFDM subcarriers may be surrounded by two active OFDM subcarriers, thereby yielding an increased frequency spacing between adjacent active OFDM subcarriers. The method may comprise the step of increasing a transmission power of the active OFDM subcarriers. Typically, the cumulated transmission power of the active OFDM subcarriers corresponds to the second transmission power. As such, the transmission power of the active OFDM subcarriers may be increased such that the cumulated transmission power is equal or substantially equal to the first transmission power.

According to another aspect, a method is described which may comprise the step of dividing a first input digital data stream to be transmitted having a first payload transmission rate and/or a second input digital data stream to be transmitted having a second payload transmission rate into a plurality of successive OFDM symbols, each OFDM symbol having a plurality of words, each word having at least one bit, wherein the first payload transmission rate may be higher than the second payload transmission rate. The dividing step may be performed in the electric domain. In a further step that may also be performed in the electric domain, a plurality of OFDM subcarriers within a predetermined OFDM frequency band may be modulated based on each successive OFDM symbol, wherein a modulated optical signal may be generated and wherein each word modulates one OFDM subcarrier. The modulated optical signal may be transmitted over the optical channel, wherein the modulated optical signal has a first transmission power distributed over the predetermined OFDM frequency band, if the first digital data steam is input. If a different payload transmission rate is required, e.g. if the second digital data steam is input, the modulated optical signal is transmitted over the optical channel, wherein the modulated optical signal has a second transmission power distributed over the predetermined OFDM frequency band. The first and second transmission power may be equal or essentially equal. Essentially equal means in the context of this application that the difference between the first and second transmission power is less than approximately +/- 10 % or approximately +/- 0.458 dB. Preferably, essentially equal means a difference of less than approximately +/- 5 % or approximately +/- 0.223 dB. The transmitted data may comprise any sort of data, such as voice data, television, data files, internet communication, telematics, VPNs and the like. The first payload transmission rate may be the maximum transmission rate of the optical OFDM transmitter.

By transmitting the modulated OFDM subcarriers by an essentially constant power over the predetermined OFDM frequency band, distortions caused by the Kerr effect can be reduced. The transmission power is distributed over the total OFDM frequency band independently of the payload transmission rate of the digital signal stream. Accordingly, each channel of a WDM system represented by one wavelength transmits a signal having essentially the same power.

Therefore, the present document proposes to feed the modulated OFDM signal comprising a plurality of modulated OFDM subcarriers with an essentially constant power into an optical fibre independent from the actual payload transmission rate. Thereby, both the predetermined OFDM frequency band and the transmission power can be kept essentially constant. Such system has the advantage that network nodes in the optical domain, such as an optical modulator, optical add/drop multiplexer, optical amplifier and optical demodulator, are not affected by a change of the payload transmission rate (i.e. a change of the transmission power). Further, the optical amplifiers in the optical transport network can be operated with a constant amplification, facilitating network layout and operation.

In other words, if the modulated OFDM signal is fed with a constant power that is irrespective of the transmission rate, nonlinearities occurring due to the Kerr effect are reduced. Thereby it is possible to achieve a data transmission using OFDM over a predetermined distance independent from the actual payload transmission rate. Further, the signal is not distorted due to optical noise and nonlinear effects.

In response to a request for changing the payload transmission rate, e.g. for transmitting the second digital data stream, at least two OFDM subcarriers may be modulated with signal information derived from one word. Thus, at least a part of the transmitted data is transmitted in a redundant way on the at least two OFDM subcarriers, also increasing reliability of the data transmission in the optical network.

The signal information derived from the single word before modulating one of the at least two OFDM subcarriers may be scrambled. Scrambling in the context of the present document may be defined as changing the physical information without changing the logical information. Scrambling may comprise, inter alia, inversion, delaying and/or phase shifting of the signal information in order to reduce influence from interference.

In response to a request for changing the payload transmission rate, e.g. for transmitting the second digital data stream, the frequency spacing between the transmitted OFDM subcarriers may be varied. Preferably, the spacing is varied such that the redistributed subcarriers cover the OFDM frequency band, e.g. equally spaced in the OFDM frequency band. It is to be noted that in response to a request for changing the payload transmission rate, at least two OFDM subcarriers may be modulated with signal information derived from a single word and/or the frequency spacing between the transmitted OFDM subcarriers may be changed. When changing the frequency spacing between the transmitted OFDM subcarriers, the number of the OFDM subcarriers may be changed as well. I.e. if the spacing between the OFDM subcarriers is increased, the number of OFDM subcarriers can be reduced. If less OFDM subcarriers are transmitted within the predetermined OFDM frequency band, the transmission power of the farther spaced apart OFDM subcarriers can be increased. Thereby, the total l transmission power for all OFDM subcarriers distributed over the predetermined OFDM frequency band can be kept constant.

According to a further aspect, a method for receiving data at a variable payload transmission rate over an optical channel using OFDM is described. The optical channel may comprise a predetermined OFDM frequency band which is divided into a number M of OFDM subcarriers. A first optical signal carrying first payload data with a first payload transmission rate may be received at a first power. The method may comprise the step of receiving a second optical signal carrying second payload data with a second payload transmission rate at a second power distributed over the predetermined OFDM frequency band. The first payload transmission rate may be higher than the second payload transmission rate and the first and second power may be equal or essentially equal thereby providing a higher second power-to-payload-transmission-rate ratio than a first power-to-payload-transmission-rate ratio. The method may comprise the further step of extracting the second payload data using the increased second power-to-payload-transmission-rate ratio.

If at a corresponding transmitter a portion of the second payload data, e.g. a word, has been modulated onto at least two of the M OFDM subcarriers, the method may comprise the step of extracting signal information from the at least two of the M OFDM subcarriers; and exploiting redundancy from the extracted signal information to determine the portion of the second payload data by at least one of: averaging the extracted signal information, Viterbi-processing the extracted signal information, or majority voting based on values derived from the extracted signal information. Furthermore, the method may comprise the step of descrambling signal information extracted from a subcarrier of the at least two of the M OFDM subcarriers, wherein said descrambling comprises at least one of: inversion, delaying and/or phase shifting of the extracted signal information.

As indicated above, a method for receiving data over an optical channel using OFDM with a variable payload transmission rate is described. The method may comprise the steps receiving a modulated optical signal comprising a plurality of OFDM subcarriers within a predetermined OFDM frequency band from an optical channel, demodulating the modulated optical signal having the plurality of OFDM subcarriers, assigning signal information detected in each OFDM subcarrier to a word of an OFDM symbol having at least one bit, assigning the words to one OFDM symbol, and successively outputting the demodulated OFDM symbols as a digital stream. The step of assigning the signal information or the step of assigning the words may include the step of combining signal information derived from a plurality of OFDM subcarriers and assigning the combined signal information to one word, if a payload transmission rate lower than the maximum payload transmission rate is received. If the maximum payload transmission rate of the OFDM transmission system is received, signal information derived from each OFDM subcarrier typically is assigned to a different word. Depending on the required payload transmission rate the assignment of signal information derived from the OFDM subcarriers to the words may be changed. Alternatively or additionally, the spacing between the subcarriers to be received may be changed in response to a required payload transmission rate. It is to be understood that a suitable signaling protocol may be provided that indicates to the receiver the frequency spacing of the OFDM subcarriers and/or which OFDM subcarrier(s) has/have to be assigned to which word.

If the signal information detected in a plurality of OFDM subcarriers is associated to one transmitted word, payload is transmitted and received multiple times in a redundant way. The payload may be transmitted at least twice. The payload may also be at least partially mirrored. It is also possible to transmit the actual payload and at least partially inverted payload distributed over each OFDM symbol.

When assigning or associating signal information detected in a plurality of OFDM subcarriers to a single word, the signal information detected in the at least two OFDM subcarriers may be averaged, Viterbi-processed or the subject to a majority voting. Thereby, the influence of distortions incurred during transmission can be further reduced. Consequently, the overall bit error rate should be improved. It is also possible to provide a plurality of threshold receiver units for the subcarriers and to process the information received for the plurality of OFDM subcarriers to be assigned to the single word by determining the most probable transmitted information (decision).

The method for receiving data over an optical channel using OFDM with a variable payload transmission rate may also comprise the step of descrambling the signal information detected in at least one of the OFDM subcarriers, which are assigned to or associated with the single word. Descrambling preferably includes inversion, delaying and/or phase shifting of the signal information. Due to the redundant signal transmission the data communication is less sensitive to distortions and interference.

According to a further aspect, an optical OFDM transmitter configured to transmit data at a variable payload transmission rate over an optical channel is described. The optical channel may comprise a predetermined OFDM frequency band which is divided into a number M of OFDM subcarriers. A first optical signal carrying first payload data with a first payload transmission rate may be transmitted with a first transmission power. The OFDM transmitter may comprise a demultiplexer configured to divide second payload data into a plurality of successive OFDM symbols, each OFDM symbol having a number N of words, each word comprising at least one bit. Furthermore, the transmitter may comprise a mapping unit configured to modulate a word of the N words onto a subcarrier of the M subcarriers; thereby yielding a second optical signal carrying second payload data with a second payload transmission rate different from the first payload transmission rate with a second transmission power distributed over the predetermined OFDM frequency band. The first and second transmission power may be essentially equal.

The transmitter may comprise an assignment unit and/or transmitter controller configured to assign a word of the N words to at least two subcarriers of the number M of subcarriers; and/or deactivate a portion of the M OFDM subcarriers for the transmission of the second optical signal, wherein the inactive portion of the M OFDM subcarriers may be surrounded by two active OFDM subcarriers, thereby yielding an increased frequency spacing between adjacent active OFDM subcarriers and increase a transmission power of the active OFDM subcarriers. According to another aspect, an optical OFDM receiver, configured to receive data at a variable payload transmission rate over an optical channel is described. The optical channel may comprise a predetermined OFDM frequency band which is divided into a number M of OFDM subcarriers. A first optical signal carrying first payload data with a first payload transmission rate may be received at a first power. The optical receiver may comprising a reception unit configured to receive a second optical signal carrying second payload data with a second payload transmission rate at a second power distributed over the predetermined OFDM frequency band. The first payload transmission rate may be higher than the second payload transmission rate. The first and second power may be essentially equal thereby providing a higher second power-to-payload-transmission-rate ratio than a first power-to-payload-transmission-rate ratio. The receiver may further comprise a processing unit configured to extract the second payload data using the increased second power-to-payload-transmission-rate ratio.

It may be assumed that at a corresponding transmitter the second payload data has been divided into a plurality of successive OFDM symbols, each OFDM symbol having a number N of words, each word comprising at least one bit. Furthermore, it may be assumed that N is smaller than M, and at least one of the N words has been modulated onto at least two of the M OFDM subcarriers. In such cases, the processing unit may comprise a receiver controller and a data assignment unit configured to extract signal information from the at least two of the M OFDM subcarriers; and exploit redundancy from the extracted signal information by at least one of: averaging the extracted signal information, Viterbi-processing the extracted signal information, or majority voting based on values derived from the extracted signal information.

According to another aspect, a WDM network is described. The network may comprise a first OFDM transmitter configured to transmit a first optical signal at a first wavelength, the first optical signal carrying first payload data with a first payload transmission rate with a first transmission power. Furthermore, the network may comprise a second OFDM transmitter according to any of the aspects outlined in the present document. The second transmitter may be configured to transmit a second optical signal at a second wavelength, the second optical signal carrying second payload data with a second payload transmission rate with a second transmission power. The first payload transmission rate may be different from the second payload transmission rate; and the first and second transmission power may be equal or essentially equal.

In particular, the first payload transmission rate may be higher than the second payload transmission rate, thereby providing a higher second power-to-payload-transmission-rate ratio than a first power-to-payload-transmission-rate ratio. The network may further comprise an optical channel configured to transmit the first and second optical signal and a first OFDM receiver configured to receive the first optical signal at the first wavelength and to extract the first payload data. Furthermore, the network may comprise a second OFDM receiver according to any of aspects outlined in the present document. The second receiver may be configured to receive the second optical signal at the second wavelength and to extract the second payload data using the increased second power-to-payload-transmission-rate ratio.

According to a further aspect, an optical transmission system is described. The system may comprise an optical channel, a first optical OFDM transmitter adapted to transmit a digital data stream with a first payload transmission rate and to feed a first OFDM signal in a first predetermined OFDM frequency band by outputting a first transmission power over the first predetermined OFDM frequency band into the optical channel and a second optical OFDM transmitter adapted to transmit a digital data stream with a second payload transmission rate and to feed a second OFDM signal in a second predetermined OFDM frequency band by outputting a second transmission power over the second predetermined OFDM frequency band into the optical channel. The second payload transmission rate may be lower than the first payload transmission rate and the first and second transmission power may be equal or essentially equal. The first transmission rate may be the maximum payload transmission rate of the first or second transmitter. The first and second transmitters may each be adapted to transmit the first or second payload transmission rate. The first and second OFDM frequency band may be essentially equal.

The first and second optical OFDM transmitter may be located at the same network node or in a network node remote from each other. Such network installations may be located in different cities. The optical transmission system preferably comprises an optical add/drop multiplexer and an optical amplifier.

Since the first OFDM signal having the first payload transmission rate and the second OFDM signal having the second payload transmission rate are fed with the same power into the optical channel, the optical network elements are not affected from the different payload transmission rates.

According to an embodiment, the first optical OFDM transmitter transmits the first OFDM signal using a first optical wavelength into the optical channel and the second optical OFDM transmitter transmits the second OFDM signal using a second optical wavelength into the optical channel. Thus, the optical transmission system may be a WDM or DWDM system, as mentioned before.

As indicated above, the present document also relates to an optical OFDM transmitter comprising a divider or demultiplexer adapted to divide a digital stream into a plurality of successive OFDM symbols, each OFDM symbol having a plurality of words, each word having at least one bit. The optical OFDM transmitter may further comprise a modulator adapted to modulate a plurality of OFDM subcarriers within a predetermined OFDM frequency band based on each successive OFDM symbol by generating a modulated signal, wherein each word modulates one OFDM subcarrier. The divider and modulator are preferably electronic components that may be realized by a digital signal processor and a suitable computer program product. The optical OFDM transmitter comprises a transmitter unit adapted to transmit said modulated signal into the optical channel by outputting the first or second transmission power distributed over the predetermined first or second OFDM frequency band. The transmitter unit may convert an electrical signal into an optical signal. Such optical OFDM transmitter may be comprised in the optical transmission system as first and/or second optical OFDM transmitter.

The optical OFDM transmitter may comprise a first transmitter controller adapted to control the optical OFDM transmitter such as to modulate at least two OFDM subcarriers with signal information derived from one word, in response to transmitting the digital data stream with the second payload transmission rate, i.e. reducing the payload transmission rate from the first to the second payload transmission rate. When transmitting the first payload transmission rate, each OFDM subcarrier is modulated with information derived from a different word. The optical OFDM transmitter may also include a scrambler adapted to scramble the signal information derived from the single word before the modulator modulates one of the at least two OFDM subcarriers modulated with the signal information derived from the single word. The scrambling may include inversion, delaying and/or phase shifting of the signal information. Alternatively or additionally to the first transmitter controller, the optical OFDM transmitter may comprise a second transmitter controller adapted to control the modulator such as to increase, in response to transmitting the digital data stream having the reduced second payload transmission rate, the frequency spacing between the transmitted OFDM subcarriers.

As indicated above, the application also relates to an optical OFDM receiver comprising a receiver unit adapted to receive a modulated signal comprising a plurality of OFDM subcarriers within a predetermined OFDM frequency band from an optical channel. Preferably, the receiver unit converts the optical signal into an electrical signal. The optical OFDM receiver may further comprise a demodulator adapted to demodulate each OFDM subcarrier to be received. An assignment unit of the optical OFDM receiver is adapted to assign signal information in each OFDM subcarrier to a word having at least one bit. The optical OFDM receiver may further comprise a combiner adapted to combine the words to one OFDM symbol, and an outputting unit adapted to successively output the demodulated OFDM symbols as a digital stream. A receiver controller of the optical OFDM receiver is adapted to control the assignment unit such as to assign or associate the signal information derived from a plurality of OFDM subcarriers to one word, in response to receiving the digital data stream having the reduced second payload transmission rate. Alternatively or additionally the receiver controller may be adapted to change the spacing of the OFDM subcarriers to be received in response to the reduced second payload transmission rate. Such optical OFDM receivers may be part of the optical transmission system.

The optical OFDM receiver may receive information from the optical system signaling about the assignment of the signal information to a word and the frequency spacing of the OFDM subcarriers. Such signaling information may be provided by the corresponding optical OFDM transmitter. The optical OFDM receiver may further comprise a decision unit receiving the plurality of signal information to be assigned to the single word and being adapted to average the signal information detected in a plurality of OFDM subcarriers, Viterbi-process the signal information detected in a plurality of OFDM subcarriers, or perform a majority voting based on values derived from the signal information detected in a plurality of OFDM subcarriers, wherein the assignment unit is adapted to assign the output of the decision unit to the single word.

Upon transmitting a digital data stream, in response to the required payload transmission rate, the assignment of words of an OFDM symbol to OFDM subcarriers and/or the spacing between the OFDM subcarriers may be changed. Upon receiving a digital data stream, in response to the required payload transmission rate, the assignment of words of OFDM subcarriers to an OFDM symbol and/or the spacing between the OFDM subcarriers may be changed. In order to change the payload transmission rate of the optical OFDM transmitter the modulation method for modulating one subcarrier may be changed.

The application also relates to an optical transceiver comprising the optical OFDM transmitter and the optical OFDM receiver.

It should be noted that the above mentioned aspects may be combined with one another or extracted from one another in various ways. In particular, all possible claim and feature combinations are considered to be disclosed by the present document. Furthermore, the aspects and features outlined in relation with a system are equally applicable in relation to the corresponding method.

The invention is now explained with reference to the accompanying drawings, showing exemplary embodiments, wherein:

Figure 1 is a schematic diagram of an optical OFDM transmitter;

Figure 2 shows a frequency diagram of the plurality of OFDM subcarriers;

Figure 3 shows a schematic diagram of an optical OFDM receiver;

Figure 4 shows a schematic diagram of an optical transport network using WDM;

Figures 5a to 5e show schematic OFDM subcarrier spectra according to a first and second embodiment of the present application;

Figure 6 is a schematic diagram of an optical OFDM transmitter of the present application; and

Figure 7 shows a frequency diagram of the plurality of OFDM subcarriers of the present application.

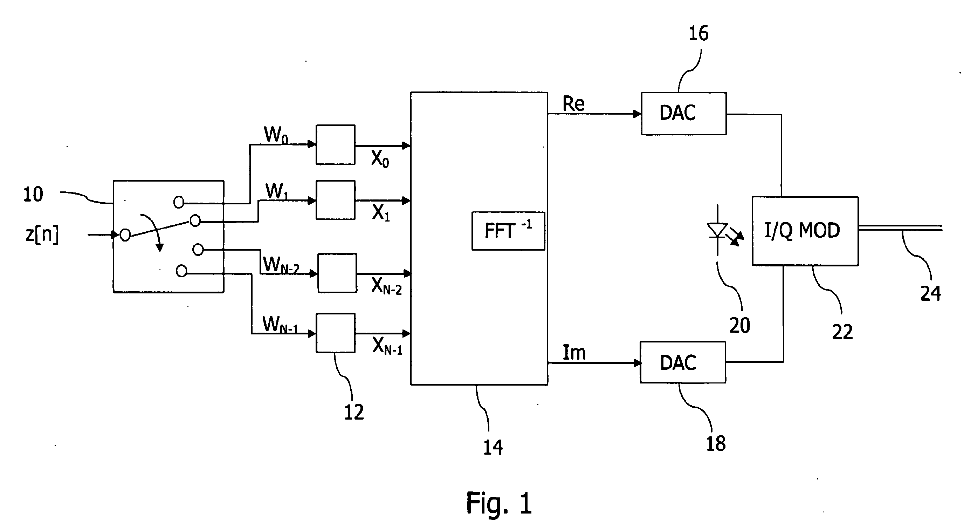

The operation of an optical OFDM transmitter is schematically explained with respect to figure 1. A digital data stream z[n] that may also comprise voice data is supplied to a divider or demultiplexer 10 dividing the digital stream into a plurality of successive OFDM symbols. Each OFDM symbol comprises a plurality of words $W_0$ - $W_{N-1}$ , wherein each word comprises at least one bit. Each word $W_0$ - $W_{N-1}$ is passed to a constellation modulator 12. Each constellation modulator transforms the word into a signal space constellation by applying a digital modulation scheme, such as ASK, PSK, QPSK, MPSK and QAM. Each constellation modulator 12 may use a different form of digital modulation or all constellation modulators 12 may use the same form of digital modulation.

The constellation data $X_0$ - $X_{N-1}$ is supplied to a mapping unit 14 comprising an inverse Fourier transform unit. The mapping unit 14 assigns each of the constellation data $X_0$ - $X_{N-1}$ to an OFDM subcarrier by using the inverse Fourier transform unit. For example, the constellation data $X_0$ may be assigned to the OFDM subcarrier having the lowest frequency and the constellation data $X_{N-1}$ may be assigned to the OFDM subcarrier having the highest frequency. The real and imaginary part of the inverse fast Fourier transform signal Re, Im are supplied to digital/analog converters 16, 18 and thereafter supplied to an optical I/Q modulator 22. The I/Q modulator 22 is also supplied with laser light having a predetermined wavelength from laser diode 20. After modulating the light beam emitted from the laser diode 20 by the optical I/Q modulator 22, the modulated light beam is fed into fibre 24 and passed to an optical add/drop multiplexer (not shown) in order to be added as a particular wavelength to a fibre for transporting the signal over a WDM system (not shown). The laser diode 20 and the I/Q modulator 22 are shown as separate components. Alternatively, the laser diode 20 may be directly modulated without the I/Q modulator 22 if the chirp effect is negligible, i.e. the chirp effect is low with respect to the spacing of the available wavelength in a WDM system.

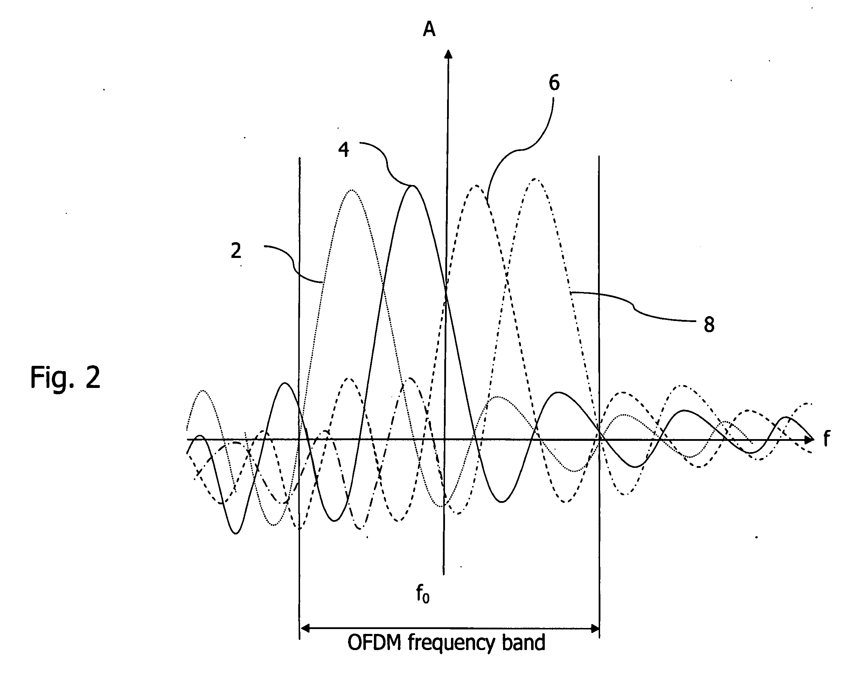

Figure 2 is a schematic diagram showing the frequencies of the OFDM subcarriers in the frequency domain. The first OFDM subcarrier 2 carries the information of the first word $W_0$, the second OFDM subcarrier 4 transmits the information related to the second word $W_1$, the third OFDM subcarrier 6 transmits the information related to the third word $W_{N-2}$ and the fourth OFDM subcarrier 8 transmits information related to the fourth word $W_{N-1}$. All four OFDM subcarriers are arranged within a predetermined OFDM frequency band around center frequency $f_0$. It is to be noted that each OFDM subcarrier has its maximum amplitude A at a frequency, at which the amplitude of a neighboring subcarrier is zero. Accordingly, no distortion arises from neighboring subcarriers (intra-symbol interference). The modulated subcarriers are transmitted during a predetermined time interval over an optical channel, the so-called symbol interval. Between two consecutive symbols a so-called guard interval may be foreseen, in which no payload data is transmitted in order to ensure that interference between two consecutive symbols can be suppressed (inter-symbol interference). The guard interval enables also that distortions arising from reflections, echo, multipath reception and the like can be suppressed. The stream of OFDM symbols in the predetermined OFDM frequency band has a comparably low rate due to the comparably long symbol duration and the guard interval between the OFDM symbols. However, since a plurality of OFDM subcarriers are transmitted in parallel for a single OFDM symbol, higher payload transmission rates can be achieved compared to a single carrier modulated by a digital modulation method such as ASK, PSK, QPDK, MPSK and QAM, for example.

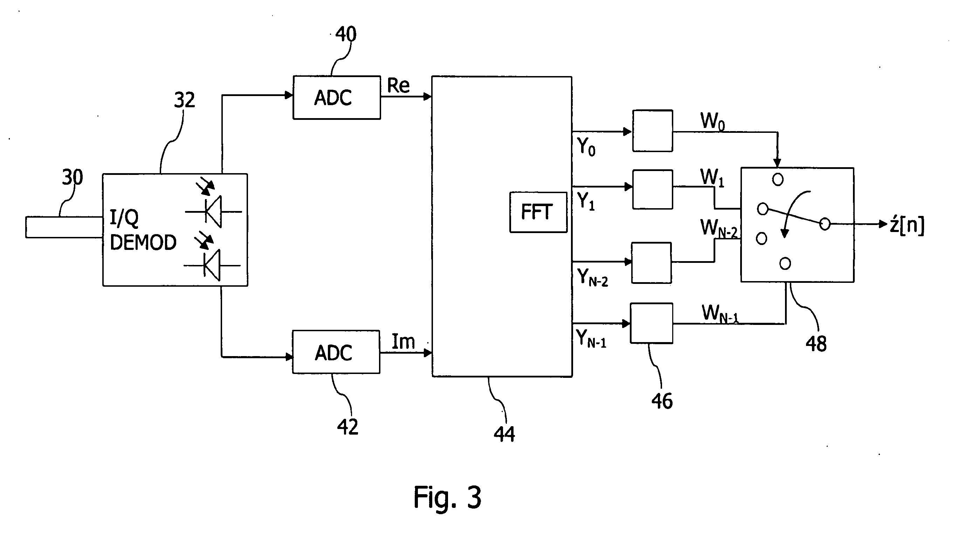

Figure 3 shows a schematic diagram of an optical OFDM receiver. A fibre 30 is connected to a drop terminal of an optical add/drop multiplexer (not shown) dropping the particular wavelength from an optical transport fibre of an WDM system. The fibre 30 is also connected to an optical I/Q demodulator 32. An optical receiver unit, such as at least one PIN diode, in the optical I/Q demodulator 32 receives the OFDM signal transmitted over the optical transport network. The in-phase and quadrature-phase signals output from the optical I/Q demodulator 32 are passed to analog/digital converters 40 and 42 in order to generate the real part Re and imaginary part Im, respectively, of the received signal.

The real part Re and the imaginary part 1m are supplied to an inverse mapping unit 44 having a fast Fourier transform unit. Particularly, the inverse mapping unit 44 outputs first signal information $Y_0$ received over the first OFDM subcarrier 2, second subcarrier information $Y_1$ received over the second OFDM subcarrier 4, third signal information $Y_{N-2}$ received over the third OFDM subcarrier 6 and fourth signal information $Y_{N-1}$ received over the fourth OFDM subcarrier 8. Such signal information is supplied to a plurality of symbol detectors 46 acting as an assignment unit. The symbol detectors 46 assign the plurality of signal information $Y_0$ to $Y_{N-1}$ to a plurality of words $W_0$ to $W_{N-1}$, respectively. During the duration of a single OFDM symbol the words $W_0$ to $W_{N-1}$ constitute an estimate of the received OFDM symbol. An outputting unit 48 successively outputs the received plurality of OFDM symbols as a serial data stream $\acute{Z}[n]$.

The components of the transmitter such as the divider 10, the constellation modulator 12 and the mapping unit 14 may be implemented as software running on a digital signal processor. However, these components may also be discrete components or implemented by an ASIC or the like. Also the inverse mapping unit 44, the symbol detectors and the outputting unit 48 of the optical OFDM receiver may be implemented by software running on a DSP, by discrete components or by an ASIC or the like.

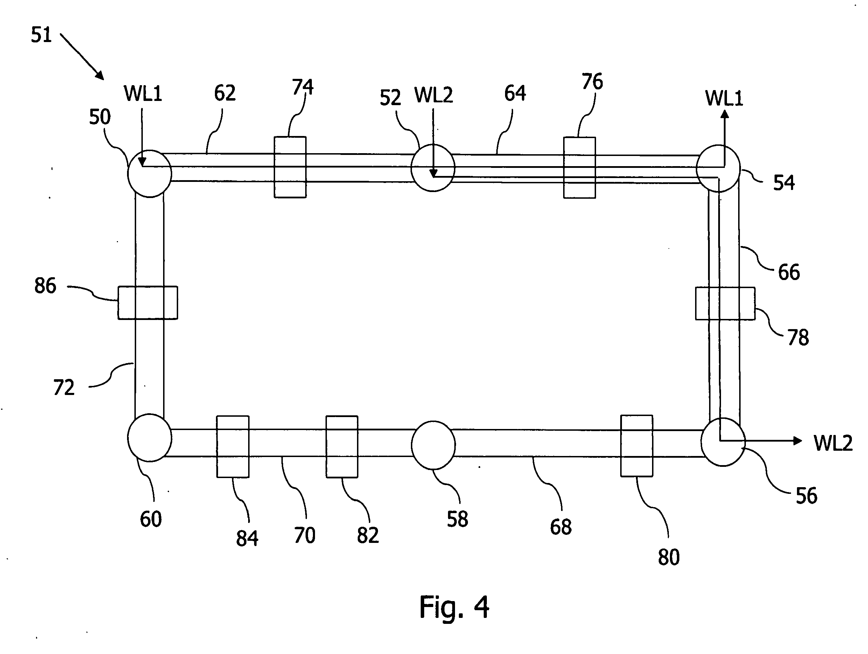

Figure 4 shows a WDM transport network, particularly a DWDM, optical transport network as an example suitable for applying the proposed concept. The optical transport network comprises a plurality of optical network nodes 50, 52, 54, 56, 58, 60. Each optical network node may comprise an optical transceiver having an optical transmitter and an optical receiver. The optical network nodes may each comprise an optical add/drop multiplexer. The optical network nodes are connected to optical fibres 62, 64, 66, 68, 70, 72. As mentioned before, the optical add/drop multiplexer can add an optical signal transmitted by an optical transmitter to an optical fibre, and can also drop an optical signal from an optical fibre and supply such optical signal to an optical receiver.

The first optical network node 50 adds a first optical signal WL1 having a first wavelength (i.e. a first optical channel) to the optical fibre 62 by the optical transmitter and the optical add/drop multiplexer of the first network node 50. The first optical signal is transmitted via the optical add/drop multiplexer of the second optical network node 52 to the second optical fibre 64. The first optical signal is dropped by the optical add/drop multiplexer of the third optical network node 54 from the fibre and supplied to the optical receiver of the transceiver of the third optical network node 54.

In the same manner a second optical signal WL2 (second optical channel) is added by the second optical network node 52 to the second optical fibre 64, and transmitted via the third optical network node 54 to the third optical fibre 66. The fourth optical network node 56 drops the second optical signal from the optical fibre.

It is to be noted that both the first optical signal and the second optical signal are transmitted by the second optical fibre 64. The first optical signal WL1 and the second optical signal WL2 have different wavelengths. The wavelength may be arranged as defined by the recommendation of ITU-T G.692, i.e. in a spacing of 0.4 nm ($\Delta f$ = 50 GHz), from 1528.27 nm ($f_{max}$ = 196.1THz) to 1560.61 nm ($f_{min}$ = 192.1 THz) as mentioned before.

The optical transport network may also comprise a plurality of optical amplifiers 74, 76, 78, 80, 82, 84, 86 that may be formed by a fibre amplifier, erbium doped fibre amplifier and Raman amplifier, for example. In a preferred embodiment, an amplifier of the optical transport network applies a constant gain to all wavelength transmitted in the WDM system. More preferably, all amplifiers in the optical transport network apply the same constant gain to all wavelength transmitted in the WDM system. This becomes possible because all WDM channels operate having the same power irrespective of their respective transmission rates.

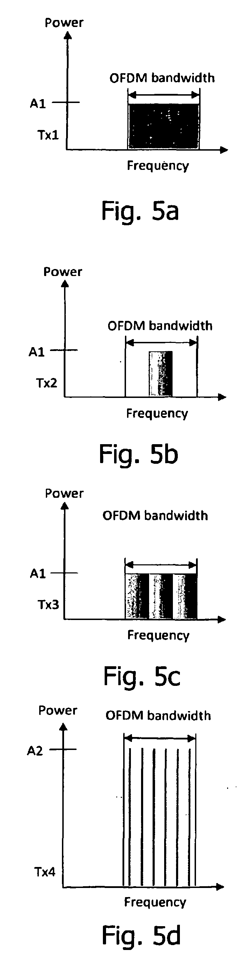

Reference is made to figures 5a to 5e showing the power of an OFDM signal versus the frequency, wherein the abscissa denotes the frequency and the ordinate notes the power.

Figure 5a shows schematically a plurality of OFDM subcarriers arranged within a predetermined OFDM frequency band also called OFDM bandwidth. The plurality of neighbouring OFDM subcarriers are not displayed as a separate OFDM subcarrier but schematically shown as shaded area 85 in the predetermined OFDM frequency band. Each OFDM subcarrier is transmitted by a predetermined power amplitude A1. The total power outputted into an optical fibre by an optical OFDM transmitter is the integral (or sum) over the amplitude of each OFDM subcarrier and the OFDM frequency band. Thus, if an optical transmitter is operated according figure 5a, a first payload transmission rate is achieved and a first transmission power over the predetermined OFDM frequency band is output into the optical fibre.

Figure 5b shows a case in which a lower payload transmission rate is required. Particularly, the payload transmission rate required in the case of figure 5b is approximately a third of the first payload transmission rate according to the case of figure 5a. Thus, approximately only a third of the OFDM subcarriers within the predetermined OFDM frequency band are allocated. This is illustrated in Fig. 5b by the shaded area 86. Therefore, in the case of figure 5b, approximately only one third of the total power distributed over the predetermined OFDM frequency band is output into the optical fibre by the optical OFDM transmitter.

All OFDM subcarriers are transmitted with the amplitude A1, which is the same amplitude as in the case of figure 5a. However, it is not possible to increase the amplitude of the OFDM subcarriers for extending the maximum possible distance for transmitting the optical signal in the optical fibre. An increase of the amplitude would give rise to the Kerr effect, which leads to a self-phase modulation, since the refraction index of the optical fibre may be a function of the intensity of the transmitted light beam, as mentioned before. If self-phase modulation (SPM) occurs, distortions between the OFDM subcarriers increase (intra-symbol interference). The Kerr effect may also lead to distortions between the beams having different optical wavelengths of a WDM system which are transported in a single fibre. This effect is typically referred to as cross phase modulation (XDM)

Figure 5c shows another OFDM subcarrier arrangement in which the same effective payload transmission rate as in the case of 5b is achieved, which is approximately one third of the payload transmission rate required in the case of figure 5a.

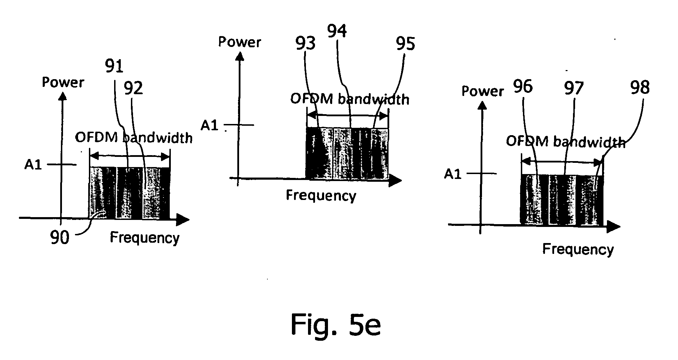

According to an embodiment, the present application proposes to transmit redundant payload multiple times as shown in figure 5c. Figure 5c shows a case in which the plurality of OFDM subcarriers is transmitting redundant information. I.e. all subcarriers in the OFDM frequency band are used for transmission of the lower payload transmission rate. The additional subcarriers carry redundant copies of the payload data. This is illustrated in Fig. 5b, where the payload data carrier by the group of subcarriers 86 is copied to other groups of subcarrier 87, 88. Thereby, the power integral over the predetermined OFDM frequency band remains constant compared to the case of figure 5a. Therefore, the same OSNR is achieved as in the case of figure 5a. As mentioned above, at least two OFDM subcarriers, e.g. comprised in the group of subcarriers 86 and 87, may transmit a signal derived from a single OFDM word, meaning the subcarrier signals being selected from constellations based on the same payload data. The information transmitted in at least one of the subcarriers may be scrambled. This is illustrated in Fig. 5e, where additional modes of redundant transmission of payload data over a plurality of subcarriers is shown. Fig. 5e illustrates the case of Fig. 5d, where the payload carried over a first group of subcarriers 91 is copied to additional groups of subcarrier 90, 92 in order to fill up the predetermined OFDM frequency band. Alternatively or in addition, the payload carried over a first group of subcarriers 94 may be copied to other groups of subcarrier 93, 95 in a mirrored fashion, e.g. such that the payload in the highest subcarrier of group 94 corresponds to the payload in the lowest subcarrier of group 95 and/or such that the payload in the lowest subcarrier of group 94 corresponds to the payload in the highest subcarrier of group 93. Alternatively or in addition, the assignment of the payload to redundant subcarriers may be performed in a pseudo-random or scrambled fashion. The payload of a subcarrier of group 97 may be assigned to a subcarrier of group 98 in a pseudo-random fashion which may differ from the assignment to a subcarrier of group 96.

In consequence of the above described multiple assignment of payload to subcarriers, the optical signal having the lower payload transmission rate can be transmitted over the same distance as in the case of figure 5a. Thus, the present application ensures that a constant power is transmitted over the constant predetermined OFDM frequency band, independent of the required payload transmission rate. This is because all OFDM subcarriers are used for transmission.

In figure 5d a plurality of OFDM subcarriers 89 is distributed over the predetermined OFDM frequency band with a higher subcarrier spacing compared to figures 5a to 5c. The payload transmission rate is lower and less OFDM subcarriers are used in the case shown in figure 5d compared to the case shown in figure 5a, In figure 5d only a third of the available OFDM subcarriers are used for data transmission. Accordingly, the available data rate is approximately one third of the maximum payload transmission rate. Since the OFDM subcarriers according to figure 5d have a comparably large spacing, the self phase modulation according to the Kerr effect does not affect neighboring OFDM subcarriers. In consequence, the launch power can be increased before non-linear effects occur. As is shown in figure 5d, the power amplitudes A2 of the OFDM subcarriers according to figure 5d are approximately three times higher compared to the case of 5a. Thereby, the same power is distributed over the same predetermined OFDM frequency band. Accordingly, the transmitted power and occupied OFDM frequency band are kept constant. Thereby, the OFDM signal can be transmitted over the same distance as in the case of 5a without the signal being affected by optical signal noise.

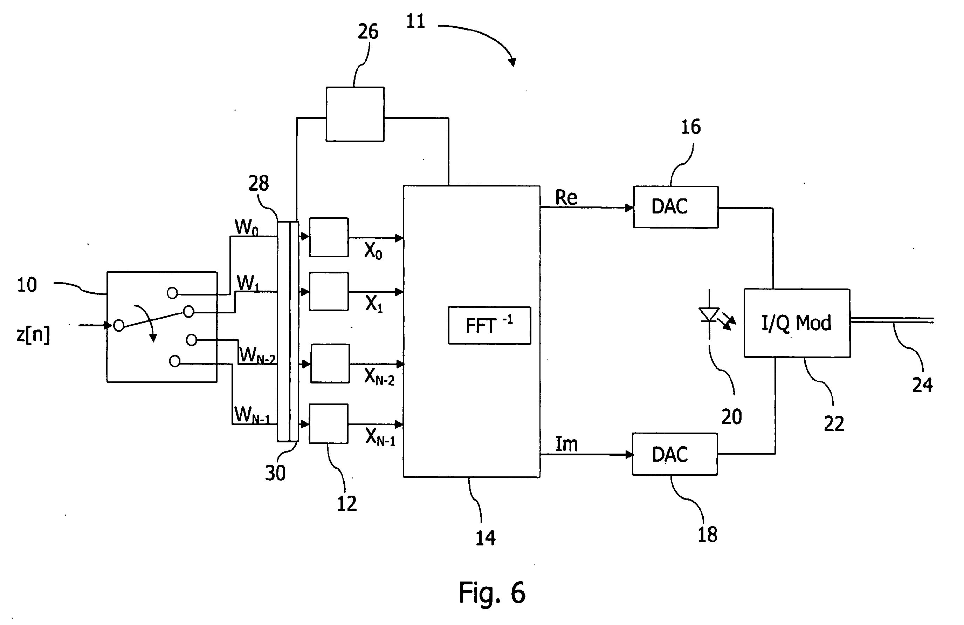

Figure 6 shows an embodiment of an optical OFDM transmitter that is based on the optical transmitter according to figure 1. The same or corresponding components are designated with the same reference numerals and a description thereof is omitted.

The optical transmitter according to the present application further comprises a transmitter controller 26 and data assignment unit 28 arranged between the divider 10 and the constellation modulators 12. The transmitter controller 26 is adapted to control the optical OFDM transmitter such as to modulate, in response to a request for changing the payload transmission rate, at least two OFDM subcarriers 2, 4, 6, 8 with signal information derived from one word. Particularly, the transmitter assignment unit 28 assigns a word $W_0$ - $W_{N-1}$ to a plurality of constellation modulators 12. The assignment of the words may be changed in response to the required (OFDM symbol) payload transmission rate. Thereby, at least one word is transmitted by a plurality of OFDM subcarriers, reducing the effective payload transmission rate and increasing redundancy. The data assignment unit 28 further comprises a scrambler 30. Scrambling in the context of the present application means that a signal is physically changed without changing the logical information. The scrambler scrambles the signal information derived from at least one word $W_0$ to $W_{N-1}$ before applying such signal information to a constellation modulator 12. The scrambler preferably applies an inversion, delaying and/or phase shifting to at least a part of the signal information derived from a word $W_0$ to $W_{N-1}$. For example, the scrambler controls the sequence in which the words are assigned to the constellation modulators 12, thus controlling the assignment of words to subcarriers. This allows varying the way the redundant copies of the payload data is arranged in the OFDM frequency band, e.g. reversing the assignment of words to subcarriers for the redundant copies of the words. The assignment unit 28 may also be arranged between the constellation modulators 12 and the mapping unit 14. Thereby, the assignment of the constellation data $X_0$ - $X_{N-1}$ to the OFDM subcarriers may be controlled, i.e. one constellation symbol $X_n$ is assigned to a plurality of OFDM subcarriers. For instance, the constellations applied to a redundant copy of a word may be rotated or inversed compared to the constellation applied to the original word or another redundant copy of the same word.

The transmitter controller 26 may also instruct the mapping unit 14 to change the spacing between the used OFDM subcarriers. In other words, the transmitter controller 26 may instruct the mapping unit 14 to skip a certain number of OFDM subcarrier and to thereby achieve an intermittent subcarrier assignment as shown in Fig. 5d. Further thereto, the transmitter controller 26 may instruct the mapping unit 14 to adjust, e.g. increase, the power amplitude, i.e. the power, of the OFDM subcarriers.

In figure 6 only one transmitter controller 26 is shown. However, two transmitter controllers 26 may be provided, one for controlling the transmitter assignment unit 28 and one for controlling the mapping unit 14.

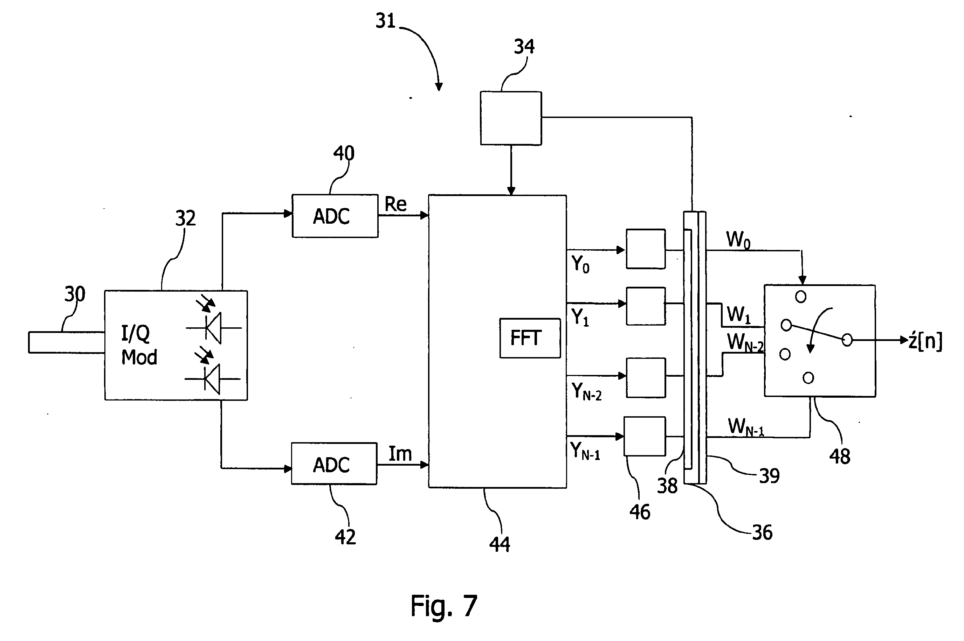

Figure 7 shows an embodiment of an optical OFDM receiver according to the present application, which is based on the receiver of figure 3. The same or similar components are designated with the same reference numerals and description thereof is omitted.

The optical receiver according to the present application further comprises a receiver controller 34, a data assignment unit 36 arranged between the symbol detectors 46 and the outputting unit 48, and a descrambler 38. The receiver controller 34 controls the data assignment unit 36 such to assign the signal information detected in a plurality of OFDM subcarriers to respective words. This allows usage of redundant signal information received in multiple subcarriers for detecting a particular word, thus improving noise resistance and increasing OSNR. The assignment of the signal information to a word or to a plurality of words may be changed in response to the required bandwidth.

The assignment unit 36 may alternatively be arranged between the inverse mapping unit 44 and the symbol detectors 46. Thereby, the assignment of the OFDM subcarriers to the symbol detectors may be controlled. Due to the redundant transmission of at least a part of the data to be transmitted, a more reliable data transmission is achieved.

Particularly, the symbols detected by a plurality of symbol detectors 46 are assigned to a single word $W_0$ to $W_{N-1}$. The plurality of symbol detectors may act as coupled receivers. Preferably, at least one of the symbols detected by the symbol detectors and assigned to the single word is descrambled in the descrambler 38. The descrambler 38 may apply an inversion, delaying and/or phase shifting of the signal information. Typically, the steps performed by the receiver 31 and in particular the descrambler 38 should be synchronized with the steps performed by the corresponding transmitter 11 and in particular the scrambler 30. This could be performed by a joint protocol used in the transmitter 11 and the receiver 31.

For example, a decision unit 39 may average signal information before assignment to symbols in the symbol detectors 46, thus increasing reliability of the symbol detection. Signal information may be Viterbi-processed by symbol detectors 46. Alternatively, a majority voting based on values derived by a plurality of the symbols detectors 46 may be performed in order to improve symbol estimation reliability.

The transmitter controller 34 may also control the inverse mapping unit 44 such that the spacing between the received OFDM subcarriers is changed in response to the required bandwidth.

The optical OFDM transmitter and the optical OFDM transceiver may exchange signaling information with respect to the actually required payload transmission rate. The optical OFDM transmitter may also calculate the required payload transmission rate based on the inputted signal s[n] or adjust the payload transmission rate in response to a received instruction.

The present application provides the advantage that independent of the payload transmission rate of the transmitted signal a constant power is fed into an optical channel. Moreover, the constant optical power is distributed over a constant OFDM frequency band independent of the actual payload transmission rate. Thereby nonlinear effects in the optical channel can be avoided, when transmission of a signal over a long distance is required by a given OSNR when using a comparably low payload transmission rate of, for example, less than 5 GHz. In order to vary the payload transmission rate of an OFDM system, it is possible to vary the number of allocated subcarriers, the number of transmitted bits per subcarrier and/or the symbol rate at constant number of bit per symbol.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof. Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A method for transmitting data at a variable payload transmission rate over an optical channel (62, 64, 66, 68, 70, 72) using OFDM, wherein the optical channel (62, 64, 66, 68, 70, 72) comprises a predetermined OFDM frequency band which is divided into a number M of OFDM subcarriers; and wherein a first optical signal carrying first payload data with a first payload transmission rate is transmitted with a first transmission power; said method comprising:

    - transmitting a second optical signal carrying second payload data with a second payload transmission rate different from the first payload transmission rate with a second transmission power distributed over the predetermined OFDM frequency band;

wherein the first and second transmission power are essentially equal.

2. The method of claim 1, further comprising:

    - dividing the second payload data into a plurality of successive OFDM symbols, each OFDM symbol having a number N of words ($X_0$ - $X_{N-1}$), each word comprising at least one bit; wherein N is smaller than M;
    - assigning the N words ($X_0$ - $X_{N-1}$) to N of the M OFDM subcarriers (2, 4, 6, 8), referred to as the assigned OFDM subcarriers, respectively; and
    - assigning a word of the number N of words to an unassigned subcarrier of the M OFDM subcarriers (2, 4, 6, 8); thereby yielding the second optical signal.

3. The method of claim 2, wherein the first optical signal carries the first payload data using all of the M OFDM subcarriers (2, 4, 6, 8); the method further comprising:

    - assigning a word of the N words to all unassigned subcarriers of the M OFDM subcarriers (2, 4, 6, 8).

4. The method of any of claims 2 to 3, wherein

    - the N assigned subcarriers are adjacent subcarriers in the predetermined OFDM frequency band;
    - the N words are assigned to the N assigned subcarriers in a first order; and
    - words of the N words are assigned to at least a portion of the unassigned subcarriers in a second order; wherein the second order corresponds to the first order, or the second order is reverse to the first order.

5. The method of any of claim 2 to 4, further comprising:

    - prior to assigning a word of the N words to an unassigned subcarrier, scrambling data comprised in the word assigned to an unassigned subcarrier, wherein said scrambling comprises one of: inversion, delaying and/or phase shifting of the data.

6. The method of any previous claim, wherein a portion of the M OFDM subcarriers is inactive for the transmission of the second optical signal, wherein the inactive portion of the M OFDM subcarriers is surrounded by two active OFDM subcarriers, thereby yielding an increased frequency spacing between adjacent active OFDM subcarriers, the method comprising:

> - increasing a transmission power of the active OFDM subcarriers.

7. A method for receiving data at a variable payload transmission rate over an optical channel (62, 64, 66, 68, 70, 72) using OFDM, wherein the optical channel (62, 64, 66, 68, 70, 72) comprises a predetermined OFDM frequency band which is divided into a number M of OFDM subcarriers; wherein a first optical signal carrying first payload data with a first payload transmission rate is received at a first power; said method comprising:

> - receiving a second optical signal carrying second payload data with a second payload transmission rate at a second power distributed over the predetermined OFDM frequency band; wherein the first payload transmission rate is higher than the second payload transmission rate; and wherein the first and second power are essentially equal thereby providing a higher second power-to-payload-transmission-rate ratio than a first power-to-payload-transmission-rate ratio; and
> - extracting the second payload data using the increased second power-to-payload-transmission-rate ratio.

8. The method of claim 7, wherein at a corresponding transmitter

> - a portion of the second payload data has been modulated onto at least two of the M OFDM subcarriers;

the method further comprising:

> - extracting signal information from the at least two of the M OFDM subcarriers; and
> - exploiting redundancy from the extracted signal information to determine the portion of the second payload data by at least one of: averaging the extracted signal information, Viterbi-processing the extracted signal information, or majority voting based on values derived from the extracted signal information.

9. The method of claim 8, further comprising:

> - descrambling signal information extracted from a subcarrier of the at least two of the M OFDM subcarriers, wherein said descrambling comprises at least one of: inversion, delaying and/or phase shifting of the extracted signal information.

10. An optical OFDM transmitter configured to transmit data at a variable payload transmission rate over an optical channel (62, 64, 66, 68, 70, 72), wherein the optical channel (62, 64, 66, 68, 70, 72) comprises a predetermined OFDM frequency band which is divided into a number M of OFDM subcarriers; wherein a first optical signal carrying first payload data with a first payload transmission rate is transmitted with a first transmission power; said OFDM transmitter comprising:

> - a demultiplexer (10, 12) configured to divide second payload data into a plurality of successive OFDM symbols, each OFDM symbol having a number N of words ($X_0$ - $X_{N-1}$), each word comprising at least one bit; and said OFDM transmitter being **characterized by**
> - a mapping unit (14) configured to modulate a word of the N words onto a subcarrier of the M subcarriers; thereby yielding a second optical signal carrying second payload data with a second payload transmission rate different from the first payload transmission rate with a second transmission power distributed over the predetermined OFDM frequency band;

wherein the first and second transmission power are essentially equal.

11. The transmitter of claim 9, further comprising an assignment unit (28) and transmitter controller (26) configured to

> - assign a word of the N words to at least two subcarriers of the number M of subcarriers; and/or
> - deactivate a portion of the M OFDM subcarriers for the transmission of the second optical signal, wherein the inactive portion of the M OFDM subcarriers is surrounded by two active OFDM subcarriers, thereby yielding an increased frequency spacing between adjacent active OFDM subcarriers and increase a transmission power of the active OFDM subcarriers.

12. An optical OFDM receiver, configured to receive data at a variable payload transmission rate over an optical channel (62, 64, 66, 68, 70, 72), wherein the optical channel (62, 64, 66, 68, 70, 72) comprises a predetermined OFDM frequency band which is divided into a number M of OFDM subcarriers; wherein a first optical signal carrying first payload data with a first payload transmission rate is received at a first power; the optical receiver being **characterized by** comprising :

- a reception unit (32) configured to receive a second optical signal carrying second payload data with a second payload transmission rate at a second power distributed over the predetermined OFDM frequency band; wherein the first payload transmission rate is higher than the second payload transmission rate; and wherein the first and second power are essentially equal thereby providing a higher second power-to-payload-transmission-rate ratio than a first power-to-payload-transmission-rate ratio; and
- a processing unit (34, 36, 44, 46, 48) configured to extract the second payload data using the increased second power-to-payload-transmission-rate ratio.

13. The receiver of claim 12, wherein at a corresponding transmitter the second payload data has been divided into a plurality of successive OFDM symbols, each OFDM symbol having a number N of words ($X_0$ - $X_{N-1}$), each word comprising at least one bit; wherein N is smaller than M, and at least one of the N words has been modulated onto at least two of the M OFDM subcarriers; wherein the processing unit (34, 36, 44, 46, 48) comprises a receiver controller (34) and a data assignment unit (36) configured to

- extract signal information from the at least two of the M OFDM subcarriers; and
- exploit redundancy from the extracted signal information by at least one of: averaging the extracted signal information, Viterbi-processing the extracted signal information, or majority voting based on values derived from the extracted signal information.

14. A WDM network comprising

- a first OFDM transmitter configured to transmit a first optical signal at a first wavelength, the first optical signal carrying first payload data with a first payload transmission rate with a first transmission power; and
- a second OFDM transmitter according to any of claims 10 to 11 configured to transmit a second optical signal at a second wavelength, the second optical signal carrying second payload data with a second payload transmission rate with a second transmission power; wherein the first payload transmission rate is different from the second payload transmission rate; and the first and second transmission power are essentially equal.

15. The WDM network of claim 14, wherein the first payload transmission rate is higher than the second payload transmission rate; thereby providing a higher second power-to-payload-transmission-rate ratio than a first power-to-payload-transmission-rate ratio; the network further comprising:

- an optical channel (62, 64, 66, 68, 70, 72) configured to transmit the first and second optical signal;
- a first OFDM receiver configured to receive the first optical signal at the first wavelength and to extract the first payload data; and
- a second OFDM receiver according to any of claims 12 to 13 configured to receive the second optical signal at the second wavelength and to extract the second payload data using the increased second power-to-payload-transmission-rate ratio.

**Patentansprüche**

1. Verfahren zum Übertragen von Daten mit einer variablen Nutzdaten-Übertragungsrate über einen optischen Kanal (62, 64, 66, 68, 70, 72) unter Verwendung von OFDM, wobei der optische Kanal (62, 64, 66, 68, 70, 72) ein vorbestimmtes OFDM-Frequenzband, welches in eine Anzahl M von OFDM-Unterträgern unterteilt ist, umfasst; und wobei ein optisches Signal, welches erste Nutzdaten mit einer ersten Nutzdaten-Übertragungsrate transportiert, mit einer ersten Sendeleistung übertragen wird; wobei das besagte Verfahren umfasst:

- Übertragen eines zweiten optischen Signals, welches zweite Nutzdaten mit einer zweiten Nutzdaten-Übertragungsrate, welche sich von der ersten Nutzdaten-Übertragungsrate unterscheiden, mit einer über das vorbestimmte OFDM-Frequenzband verteilen zweiten Sendeleistung übertragen wird;

wobei die erste und die zweite Sendeleistung im Wesentlichen gleich sind.

2. Verfahren nach Anspruch 1, weiterhin umfassend:

- Unterteilten der zweiten Nutzlastdaten in eine Vielzahl von aufeinanderfolgenden OFDM-Symbole, wobei jedes OFDM-Symbol eine Anzahl N von Wörtern ($X_0$ - $X_{N-1}$) aufweist, wobei jedes Wort mindestens ein Bit umfasst; wobei N kleiner als M ist;
- Zuordnen der N Wörter ($X_0$ - $X_{N-1}$) zu N der M OFDM-Unterträger (2, 4, 6, 8), als zugeordnete OFDM-Unterträger bezeichnet; und
- Zuordnen eines Wortes der Anzahl N von Wörtern zu einem nicht zugeordneten Unterträger der M OFDM-Unterträger (2, 4, 6, 8); wodurch das zweite optische Signal erhalten wird.

3. Verfahren nach Anspruch 2, wobei das erste optische Signal die ersten Nutzdaten unter Verwendung aller der M OFDM-Unterträger (2, 4, 6, 8) transportiert; wobei das Verfahren weiterhin umfasst:

- Zuordnen eines Wertes der N Wörter zu allen nicht zugeordneten Unterträgern der M OFDM-Unterträger (2, 4, 6, 8).

4. Verfahren nach einem beliebigen der Ansprüche 2 bis 3, wobei

- die N zugeordneten Unterträger benachbarten Unterträger in dem vorbestimmten OFDM-Frequenzband sind;
- die N Wörter den N zugeordneten Unterträgern in einer ersten Reihenfolge zugeordnet werden; und
- Wörter der N Wörter zu mindestens einem Teil der nicht zugeordneten Unterträger in einer zweiten Reihenfolge zugeordnet werden; wobei die zweite Reihenfolge der ersten Reihenfolge entspricht oder die zweite Reihenfolge die umgekehrte erste Reihenfolge ist.

5. Verfahren nach einem beliebigen der Ansprüche 2 bis 4, weiterhin umfassend:

- vor Zuordnen eines Wortes der N Wörter zu einem nicht zugeordneten Unterträger, Verschlüsseln von in dem einem nicht zugeordneten Unterträger zugeordneten Wort enthaltenen Daten, wobei das besagte Verschlüsseln entweder eine Inversion, eine Verzögerung und/der eine Phasenverschiebung der Daten umfasst.

6. Verfahren nach einem beliebigen der vorstehenden Ansprüche, wobei ein Teil der M OFDM-Unterträger für die Übertragung des zweiten optischen Signals inaktiv ist, wobei der inaktive Teil der M OFDM-Unterträger von zwei aktiven OFDM-Unterträgern umgeben ist, wodurch ein erhöhter Frequenzabstand zwischen benachbarten aktiven OFDM-Unterträgern erhalten wird, wobei das Verwahren umfasst:

- Erhöhen einer Sendeleistung der aktiven OFDM-Unterträger.

7. Verfahren zum Empfangen von Daten mit einer variablen Nutzdaten-Übertragungsrate über einen optischen Kanal (62, 64, 66, 68, 70, 72) unter Verwendung von OFDM, wobei der optische Kanal (62, 64, 66, 68, 70, 72) ein vorbestimmtes OFDM-Frequenzband, welches in eine Anzahl M von OFDM-Unterträgern unterteilt ist, umfaßt; wobei ein erstes optisches Signal, welches erste Nutzdaten mit einer ersten Nutzdaten-Übertragungsrate mit einer ersten Leistung empfangen wird; wobei das Verfahren umfasst:

- Empfangen eines zweiten optischen Signals, welches zweite Nutzdaten mit einer zweiten Nutzdaten-Übertragungsrate mit einer über das vorbestimmte OFDM-Frequenzband verteilern zweiten Leistung transportiert; wobei die erste Nutzdaten-Übertragungsrate höher als die zweite Nutzdaten-Übertragungsrate ist; und wobei die und die zweite Leistung im Wesentlichen gleich sind, wodurch ein höheres zweites Leistung-zu-Nutzdaten-Übertragungsrate-Verhältnis als ein erstes Leistung-zu-Nutzdaten-Übertragungsrate-Verhältnis erreicht wird; und
- Extrahieren der zweiten Nutzdaten unter Verwendung des erhöhten zweiten Leistung-zu-Nutzdaten-Obertragungsrate-Verhältnisses.

8. Verfahren nach Anspruch 7, wobei an einem entsprechenden Sender

- ein Teil der zweiten Nutzdaten auf mindestens zwei der M OFDM-Unterträger moduliert wurde;

wobei das Verfahren weiterhin umfasst:

- Extrahieren von Signalinformationen aus den mindestens zwei der M OFDM-Unterträger; und
- Auswerten der Redundanz aus den extrahierten Signalinformationen, um den Teil der zweiten Nutzdaten entweder durch Mitteln der extrahierten Signalinformationen, Viterbi-Verarbeitung der extrahierten Signalinformationen oder Majority-Voting auf der Basis von von den extrahierten Signalinformationen abgeleiteten Werten zu ermitteln,

9. Verfahren nach Anspruch 8, weiterhin umfassend:

- Entschlüsseln der aus einem Unterträger der mindestens zwei der M OFDM-Unterträger extrahierten Signalinformationen, wobei das besagte Entschlüsseln mindestens entweder eine Inversion, eine Verzögerung und/oder eine Phasenverschiebung der extrahierten Signalinformationen umfasst.

10. Optischer OFDM-Sender, konfiguriert für die Übertragung von Daten mit einer variablen Nutzdaten-Übertragungsrate über einen optischen Kanal (62, 64, 66, 68, 70, 72), wobei der optische Kanal (62, 64, 66, 68, 70, 72) ein vorbestimmtes OFDM-Frequenzband umfasst, weiches in eine Anzahl M von OFDM-Unterträgern unterteilt ist; wobei ein erstes optisches Signal, welches erste Nutzdaten mit einer ersten Nutzdaten-Übertragungsrate transportiert, mit einer ersten Sendeleistung überragen wird, wobei der besagte OFDM-Sender umfasst:

- Einen Demultiplexer (10, 12), welcher dafür konfiguriert ist, zweite Nutzdaten in eine Vielzahl von aufeinanderfolgenden OFDM-Symbole zu unterteilen, wobei jedes OFDM-Symbol eine Anzahl N von Wörtern ($X_0$ - $X_{N-1}$) aufweist, wobei jedes Wort mindestens ein Bit enthält, und wobei der besagte OFDM-Sender **gekennzeichnet ist durch**
- eine Abbildungseinheit (14), welche dafür konfiguriert ist, ein Wort der N Wörter auf einen Unterträger der M Unterträger zu modulieren, wodurch ein zweites optisches Signal erhalten wird, welches zweite Nutzdaten mit einer zweiten Nutzdaten-Übertragungsrate, die sich von der ersten Nutzdaten-Übertragungsrate unterscheidet, mit einer über das vorbestimmte OFDM-Frequenzband verteilten zweiten Sendeleistung transportiert;

wobei die erste und die zweite Sendeleistung im Wesentlichen gleich sind.

11. Sender nach Anspruch 9, weiterhin umfassend eine Zuweisungseinheit (28) und einen Sender-Controller (26), konfiguriert für

- das Zuweisen eines Wortes der N Wörter an mindestens zwei Unterträger der Anzahl M von Unterträgern; und/oder
- das Deaktivieren eines Teils der M OFDM-Unterträger für die Übertragung des zweiten optischen Signals, wobei der inaktive Teil der M OFDM-Unterträger von zwei aktiven OFDM-Unterträgern umgeben ist, wodurch ein erhöhter Frequenzabstand zwischen benachbarten aktiven OFDM-Unterträgern erhalten wird, und das Erhöhen einer Übertragungsleistung der aktiven OFDM-Unterträger.

12. Optischer OFDM-Empfänger, weicher für den Empfang von Daten mit einer variablen Nutzdaten-Übertragungsrate über einen optischen Kanal (62, 64, 66, 68, 70, 72) konfiguriert ist, wobei der optische Kanal (62, 64, 66, 68, 70, 72) ein vorbestimmtes OFDM-Frequenzband umfaßt, welches in eine Anzahl M von OFDM-Unterträgern unterteilt ist, umfasst; wobei ein erstes optisches Signal, welches erste Nutzdaten mit einer ersten Nutzdaten-Übertragungsrate transpartiert, mit einer ersten Leistung empfangen wird; wobei der optische Empfänger **dadurch gekennzeichnet ist, dass** er umfasst:

- Eine Empfangseinheit (32), die dafür konfiguriert ist, ein zweites optisches Signal, welches zweite Nutzdaten mit einer zweiten Nutzdaten-Übertragungsrate mit einer über das vorbestimmte OFDM-Frequenzband verteilen zweiten Leistung transportiert, zu empfangen; wobei die erste Nutzdaten-Übertragungsrate höher als die zweite Nutzdaten-Übertragungsrate ist; und wobei die erste und die zweite Leistung im Wesentlichen gleich sind, wodurch ein höheres zweites Leistung-zu-Nutzdaten-Übertragungsrate-Verhältnis als das erste Leistung-zu-Nutzdaten-Übertragungsrate-Verhältnis erreicht wird; und

- eine Verarbeitungseinheit (34, 36, 44, 46, 48), welche für das Extrahieren der zweiten Nutzdaten unter Verwendung des erhöhten zweiten Leistung-zu-Nutzdaten-Übertragungsrate-Verhältnisses konfiguriert ist.

13. Empfänger nach Anspruch 12, wobei die zweiten Nutzdaten an einem entsprechenden Sender in eine Vielzahl von aufeinanderfolgenden OFDM-symbole unterteilt wurden, wobei jedes OFDM-Symbol eine Anzahl N von Wörtern ($X_0$ - $X_{N-1}$) aufweist, wobei jedes Wort mindestens ein Bit enthält; wobei N kleiner als M ist, und wobei mindestens eines der N Wörter auf mindestens zwei der M OFDM-Unterträger moduliert wurde; wobei die Verarbeitungseinheit (34, 36, 44, 46, 48) einen Empfänger-Controller (34) und eine Datenzuweisungseinheit (36) umfasst und dafür konfiguriert ist,

- Signalinformationen aus den mindestens zwei der M OFDM-Unterträger zu extrahieren; und
- die Redundanz aus den extrahierten Signalinformationen durch mindestens entweder Mitteln der extrahierten Signalinformationen, Viterbi-Verarbeitung der extrahierten Signalinformationen oder Majority-Voting auf der Basis von von den extrahierten Signalinformationen abgeleiteten Werten auszuwerten.

14. WDM-Netzwerk, umfassend:

- Einen ersten OFDM-Sender, welcher für die Übertragung eines ersten optischen Signals mit einer ersten Wellenlänge konfiguriert ist, wobei das erste optische Signal erste Nutzdaten mit einer ersten Nutzdaten-Übertragungsrate mit einer ersten Sendeleistung transportiert; und
- einen zweiten OFDM-Sender gemäß einem beliebigen der Ansprüche 10 bis 11, welcher für die Übertragung eines zweiten optischen Signals mit einer zweiten Wellenlänge konfiguriert ist, wobei das zweite optische Signal zweite Nutzdaten mit einer zweiten Nutzdaten-Übertragungsrate mit einer zweiten Sendeleistung transportiert; wobei sich die erste Nutzdaten-Übertragungsrate von der zweiten Nutzdaten-Übertragungsrate unterscheidet; und wobei die erste und die zweite Sendeleistung im Wesentlichen gleich sind.

15. WDM-Netzwerk nach Anspruch 14, wobei die erste Nutzdaten-Übertragungsrate höher als die zweite Nutzdaten-Übertragungsrate ist; wodurch ein höheres zweites Leistung-zu-Nutzdaten-Übertragungsrate-Verhältnis als ein erstes Leistung-zu-Nutzdaten-Übertragungsrate-Verhältnis erreicht wird; wobei das Netzwerk weiterhin umfasst:

- Einen optischen Kanal (62, 64, 66, 68, 70, 72), welcher für die Übertragung des ersten und des zweiten optischen Signals konfiguriert ist;
- einen ersten OFDM-Empfäger, welcher für den Empfang des ersten optischen Signals mit der ersten Wellenlänge und das Extrahieren der ersten Nutzdaten konfiguriert ist; und
- einen zweiten OFDM-Empfänger gemäß einem beliebigen der Ansprüche 12 bis 13, welcher für den Empfang des zweiten optischen Signals mit einer zweiten Wellenlänge und das Extrahieren der zweiten Nutzdaten unter Verwendung des erhöhten zweiten Leistung-zu-Nutzdaten-Übertragungsrate-Verhältnisses konfiguriert ist.

**Revendications**

1. Procédé d'émission de données à un débit d'émission de charge utile variable sur un canal optique (62, 64, 66, 68, 70, 72) en utilisant l'OFDM, le canal optique (62, 64, 66, 68, 70, 72) comprenant une bande de fréquences OFDM prédéterminée qui est divisée en un nombre M de sous-porteuses OFDM ; et selon lequel un premier signal optique transportant des premières données de charge utile à un premier débit d'émission de charge utile est émis avec une première puissance d'émission ; ledit procédé comprenant :

- émission d'un second signal optique transportant des secondes données de charge utile à un second débit d'émission de charge utile différent du premier débit d'émission de charge utile avec une seconde puissance d'émission distribuée sur la bande de fréquences OFDM prédéterminée ;

la première et la seconde puissances d'émission étant pour l'essentiel égales.

2. Procédé selon la revendication 1, comprenant en outre :

- division des secondes données de charge utile en une pluralité de symboles OFDM successifs, chaque symbole OFDM possédant un nombre N de mots $(X_0 - X_{N-1})$, chaque mort comprenant au moins un bit ; N étant inférieur à M ;
- affectation des N mots $(X_0 - X_{N-1})$ à N des M sous-porteuses OFDM (2, 4, 6, 8), appelées respectivement les sous-porteuses OFDM affectées ; et
- affectation d'un mont du nombre N de mots à une sous-porteuse non affectée parmi les M sous-porteuses OFDM (2, 4, 6, 8), produisant ainsi le second signal optique.

3. Procédé selon la revendication 2, selon lequel le premier signal optique transporté les premières données de charge utile en utilisant la totalité des M sous-porteuses OFDM (2, 4, 6, 8) ; le procédé comprenant en outre :

- affectation d'un mort du nombre N de mots à toutes les sous-porteuses non affectées parmi les M sous-porteuses OFDM (2, 4, 6, 8).

4. Procédé selon l'une quelconque des revendications 2 à 3, selon lequel :

- les N sous-porteuses non affectées sont des sous-porteuses adjacentes dans la bande de fréquences OFDM prédéterminée ;
- les N mots sont affectés aux N sous-porteuses affectées dans un premier ordre ; et
- des mots parmi les N mots sont affectés à au moins une portion des sous-porteuses non affectées dans un second ordre ; le second ordre correspondant au premier ordre ou le second ordre étant l'inverse du premier ordre.

5. Procédé selon l'une quelconque des revendications 2 à 4, comprenant en outre :

- avant l'affectation d'un mot du nombre N de mots à une sous-porteuse non affectée, chèrement des données comprises dans le mot affecté à une sous-porteuse non affectée, ledit chiffrement comprenant l'une des opérations suivantes : inversion, retard et/ou déphasage des données.

6. Procédé selon l'une quelconque des revendications précédentes, selon lequel une portion des M sous-porteuses OFDM est inactive pendant l'émission du second signal optique, selon lequel la portion inactive des M sous-porteuses OFDM est entourée par deux sous-porteuses OFDM actives, produisant ainsi un espacement des fréquences accru entre les sous-porteuses OFDM actives adjacentes, le procédé comprenant :

- augmentation d'une puissance d'émission des sous-porteuses OFDM actives.

**7.** Procédé de réception de données à un débit d'émission de charge utile variable sur un canal optique (62, 64, 66, 68, 70, 72) en utilisant l'OFDM, le canal optique (62, 64, 66, 68, 70, 72) comprenant une bande de fréquences OFDM prédéterminée qui est divisée en un nombre M de sous-porteuses OFDM ; selon lequel un premier signal optique transportant des premières données de charge utile à un premier débit d'émission de charge utile est reçu à une première puissance ; ledit procédé comprenant :

- réception d'un second signal optique transportant des secondes données de charge utile à un second débit d'émission à une seconde puissance distribuée sur la bande de fréquences OFDM prédéterminée ; le premier débit d'émission de charge utile étant supérieur au second débit d'émission de charge utile ; et la première et la seconde puissances étant pour l'essentiel égales, ce qui produit ainsi un rapport seconde puissance/débit d'émission de charge utile supérieur à un rapport première puissance/débit d'émission de charge utile ; et
- extraction des secondes données de charge utile en utilisant le rapport seconde puissance/débit d'émission de charge utile accru.

**8.** Procédé selon la revendication 7, selon lequel, au niveau d'un émetteur correspondant,

- une portion des secondes données de charge utile a été modulée sur au moins deux des M sous-porteuses OFDM ;

le procédé comprenant en outre :

- extractions des informations de signal des au moins deux des M sous-porteuses OFDM ; et
- exploitation de la redondance des informations de signal extraites pour déterminer la portion des secondes données de charge utile par au moins l'une des opérations suivantes : calcul de la moyenne des informations de signal extraites, traitement Viterbi des informations de signal extraites ou vote à la majorité en se basant sur les valeurs dérivées des informations de signal extraites,

**9.** Procédé selon la revendication 8, comprenant en outre :

- déchiffrement des informations de signal extraites d'une sous-porteuse des au moins deux des M sous-porteuses OFDM, ledit déchiffrement comprenant au moins l'une des opérations suivantes : inversion, retard et/ou déphasage des informations de signal extraites,

**10.** Émetteur OFDM optique configuré pour émettre des données à ure débit d'émission de charge utile variable sur une canal optique (62, 64, 66, 68, 70, 72), le canal optique (62, 64, 66, 68, 70, 72) comprenant une bande de fréquences OFDM prédéterminée qui est divisée en un nombre M de sous-porteuses OFDM ; avec lequel un premier signal optique transportant premières données de charge utile à un premier débit d'émission de charge utile est émis avec une première puissance d'émission ; ledit émetteur OFDM comprenant :

- un démultiplexeur (10, 12) configuré pour diviser des secondes données de charge utile en une pluralité de symboles OFDM successifs, chaque symbole OFDM possédant un nombre N de mots $(X_0 - X_{N-1)}$, chaque mot comprenant au moins un bit ; et ledit émetteur OFDM étant **caractérisé par**
- une unité de mise en correspondance (14) configurée pour moduler un mot des N mots sur une sous-porteuse des M sous-porteuses ; produisant ainsi un second signal optique transportant des secondes données de charge utile à un second débit d'émission de charge utile différent du premier débit d'émission de charge utile avec une seconde puissance d'émission distribuée sur la bande de fréquences OFDM prédéterminée ;

la première et la seconde puissances d'émission étant pour l'essentiel égales,

**11.** Émetteur selon la revendication 9, comprenant en outre une unité d'affectation (28) et un contrôleur d'émetteur (26) configurés pour

- affecter un mort du nombre N de mots à au moins deux sous-porteuses parmi le nombre M de sous-porteuses ; et/ou
- désactiver une portion des M sous-porteuses OFDM pendant rémission du second signal optique, la portion inactive des M sous-porteuses OFDM étant entourée par deux sous-porteuses OFDM actives, produisant ainsi un espacement des fréquences accru entre les sous-porteuses OFDM actives adjacentes et une puissance d'émission accrue des sous-porteuses OFDM actives.

**12.** Récepteur OFDM optique configuré pour recevoir des données à un débit d'émission de charge utile variable sur un canal optique (62, 64, 66, 68, 70, 72), le canal optique (62, 64, 66, 68, 70, 72) comprenant une bande de fréquences OFDM prédéterminée qui est divisée en un nombre M de sous-porteuses OFDM ; avec lequel un premier signal optique transportant des premières données de charge utile à un premier débit d'émission de charge utile est reçu à une première puissance ; ledit récepteur optique **caractérisé en ce qu'**il comprend :

- une unité de réception (32) configurée pour recevoir un second signal optique transportant des secondes données de charge utile à un second débit d'émission à une seconde puissance distribuée sur la bande de fréquences OFDM prédéterminée ; le premier débit d'émission de charge utile étant supérieur au second débit d'émission de charge utile ; et la première et la seconde puissances étant pour l'essentiel égales, ce qui produit ainsi un rapport seconde puissance/débit d'émission de charge utile supérieur à un rapport première puissance/débit d'émission de charge utile ; et
- une unité de traitement (34, 36, 44, 46, 48) configurée pour extraire les secondes données de charge utile en utilisant le rapport seconde puissance/débit d'émission de charge utile.

13. Récepteur selon la revendication 12, avec lequel, au niveau d'un émetteur correspondant, les secondes données de charge utile ont été divisées en une pluralité de symboles OFDM successifs, chaque symbole OFDM possédant un nombre N de mots ($X_0$ - $X_{N-1}$), chaque mot comprenant au moins une bit ; N étant inférieur à M et au moins un des N mots ayant été modulé sur au moins deux des M sous-porteuses OFDM ; l'unité de traitement (34, 36, 44, 46, 48) comprenant un contrôleur de récepteur (34) et une unité d'affectation de données (36) configurés pour

- extraire des informations de signal d'au moins deux des M sous-porteuses OFDM ; et
- exploiter la redondance des informations de signal extraites par au moins l'une des opérations suivantes : calcul de la moyenne des informations de signal extraites, traitement Viterbi des informations de signal extraites ou vote à la majorité en se basant sur les valeurs dérivées des informations de signal extraites,

14. Réseau WDM comprenant :

- un premier émetteur OFDM configuré pour émettre un premier signal optique à une première longueur d'onde, le premier signal optique transportant des premières données de charge utile à un premier débit d'émission de charge utile avec une première puissance d'émission ; et
- un second émetteur OFDM selon l'une quelconque des revendications 10 à 11, configuré pour émettre un second signal optique à une seconde longueur d'onde, le second signal optique transportant des secondes données de charge utile à un second débit d'émission de charge utile avec une seconde puissance d'émission ; le premier débit d'émission de charge utile étant différent du second débit d'émission de charge utile ; et la première et la seconde puissances d'émission étant pour l'essentiel égales.

15. Réseau WDM selon la revendication 14, avec lequel le premier débit d'émission de charge utile est supérieur au second débit d'émission de charge utile ; ce qui produit ainsi un rapport seconde puissance/débit d'émission de charge utile supérieur à un rapport première puissance/débit d'émission de charge utile ; le réseau comprenant en outre :

- un canal optique (62, 64, 66, 68, 70, 72) configuré pour émettre le premier et le second signaux optiques ;
- un premier récepteur OFDM configuré pour recevoir le premier signal optique à la première longueur d'onde et pour extraire les premières données de charge utile; et
- un second récepteur OFDM selon l'une quelconque des revendications 12 à 13, configuré pour recevoir le second signal optique à la seconde longueur d'onde et pour extraire les secondes données de charge utile en utilisant le rapport seconde puissance/débit d'émission de charge utile accru.

Fig. 1

Fig. 2

Fig. 3

Fig. 4

EP 2 337 245 B1

Fig. 5a

Fig. 5b

Fig. 5c

Fig. 5d

Fig. 5e

Fig. 6

Fig. 7

EP 2 337 245 B1

**EP 2 337 245 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2071754 A